# NEW EUROPEAN PATENT SPECIFICATION

(11) **EP 1 699 886 B2**
(45) Date of publication and mention of the opposition decision: **22.08.2012**
(45) Mention of the grant of the patent: 13.02.2008
(21) Application number: 04818025.1
(22) Date of filing: 15.12.2004
(51) Int. Cl.: C09D 7/00, C09D 5/00, C08K 3/00

(54) **COATING COMPOSITIONS WITH ENHANCED CORROSION RESISTANCE AND APPEARANCE**
BESCHICHTUNGSMASSEN MIT VERBESSERTEM KORROSIONSSCHUTZ UND AUSSEHEN
COMPOSITIONS DE REVETEMENT PRESENTANT UNE RESISTANCE A LA CORROSION ET UN ASPECT AMELIORES

(30) Priority: 17.12.2003 US 738511
(43) Date of publication of application: 13.09.2006
(73) Proprietor: PPG Industries Ohio, Inc., Cleveland, OH 44111 (US)
(72) Inventor: SCHNEIDER, John R., Glenshaw, PA 15116 (US)
(74) Representative: Polypatent
(86) International application number: PCT/US2004/042015
(87) International publication number: WO 2005/059045

(56) References cited:
- EP-A- 0 035 609
- EP-A- 0 106 707
- EP-A- 0 139 187
- EP-A- 0 625 541
- EP-A- 0 659 843
- EP-A- 0 718 378
- EP-A1- 0 611 095
- WO-A-03/099944
- WO-A-03/102091
- WO-A1-02/10292
- DE-A1- 3 731 733
- US-A- 4 385 138
- US-A- 4 442 244
- US-A- 4 504 614
- US-A- 5 190 583
- US-A- 5 358 982
- US-A- 5 439 957
- US-B1- 6 376 616
- I. FRANTA: 'Elastomers and Rubber Compounding Materials', 1989, ELSEVIER pages 410 - 411
- 'Roempp Lexikon Lacke und Druckfarben', 1998, GEORG THIEME VERLAG page 327

## Description

### FIELD OF THE INVENTION

The present invention relates to coating compositions that provide improved corrosion resistance and to methods for using the same. More specifically, the improved resistance is achieved by adding particles to a film-forming resin.

### BACKGROUND OF THE INVENTION

"Color-plus-clear" coating systems involving the application of a colored or pigmented basecoat to a substrate followed by application of a transparent or clear topcoat over the basecoat have become increasingly popular as original finishes for a number of consumer products including, for example, cars and floor coverings such as ceramic tiles and wood flooring. The color-plus-clear coating systems have outstanding appearance properties, including gloss and distinctness of image, due in large part to the clear coat.

"Monocoat" coating systems comprising a one coat color layer are applied themselves as the topcoat. Monocoat coating systems are frequently used for household appliances, lawn and garden equipment, interior fixtures, and the like. The monocoats also have good appearance properties, including gloss and distinctness of image.

These coating systems, deposited and cured onto a substrate, can be subject to damage from the environment. For example, corrosion of a coated metallic substrate can occur as the coated metallic substrate is exposed to oxygen and water present in the atmosphere. It is known in the art that a "primer" coating layer is required when these coating systems are applied over metallic substrates to protect the substrate from corrosion. The primer layer is applied directly to the metallic substrate and contains pigments known in the art to prevent corrosion. These pigments are typically required at high concentrations for performance effectiveness and may adversely affect gloss and distinctness of image of the cured primer coating such that the color-plus-clear or monocoat coating is additionally required for improved appearance.

It is also known in the art that the addition of particles to a film-forming resin can improve the scratch and mar resistance of the cured coating. For example, addition of a low concentration of particles to a clearcoat composition can improve scratch and mar resistance of the cured clearcoat without adversely affecting appearance As the concentration of particles is increased, the appearance of the cured coating can be adversely affected.
EP-A-1 512 729 describes flaky particles that contain microparticles having a mean particle size of 5-500 µm and high refractive index incorporated into a cosmetic or coating composition.
From EP-A-1 512 728 a photocatalytic coating material comprising photocatalytic oxide particles having a particle size in the range of 5-50 nm and a hydrophobic resin emulsion whereby the particles of the resin emulsion have a size in the range of 80 to 300 nm. But this reference does neither refer to aluminum silicate or borosilicate glass, nor does it disclose the combination of a film-forming resin having at least one reactive functional group with at least one curing agent having functional groups reactive with the functional group of the polymer.
US-B1-6,376,616 relates to an anionic electrodeposition coating with pigments having a maximum particle size of 0.1-10 µm whereby neither aluminum silicate nor borosilicate glass is mentioned.
EP-A-718 378 discloses non-shiny iron oxide containing color pigments whereby platelet pigments having a particle size of 1-150 µm are coated with iron oxide.
EP-A-659 843 relates to coating compositions whereby neither the relative amount of inorganic particles and film-forming resins, nor the use of aluminum silicate or borosilicate glass as inorganic particles is disclosed.
EP-A-625 541 discloses a coating composition comprising a film-forming polymer latex, as well as titanium dioxide particles.
US-A-5,358,982 relates to crosslinked polymer microparticles that can be used as substitute for titanium dioxide as organic pigment in an electrocoating composition.
From DE-A1-37 31 733 a coating composition is known comprising an aqueous polymer dispersion and inorganic pigments, whereby the inorganic pigments have an average particle size of 7-70 nm but the polymer dispersion is not a combination of a functional film-forming resin with a crosslinker.
EP-A-139 187 relates to color plus clear coating applications whereby in the basecoat as well as the topcoat inorganic microparticles having a size from 1-150 nm are included. Preferred inorganic microparticles are silica particles.
US-A-4,504,614 discloses a method of thickening aqueous latex compositions whereby as thickening agent fumed silica having an average particle size of 7-16 nm is used.
EP-A-106 707 discloses a coating composition comprising abrasive particles selected from diamond, cubic boron nitride and boron carbide.
US-A-4,385,138 relates to powder slurry coating compositions. Although the base composition of the examples mentions rutile titanium dioxide in an amount of 50 parts, based on 100 parts of combined film-forming resin and curing agent there is no disclosure regarding the particle size of the rutile.
US-A-4,442,244 discloses in example 1 the incorporation of 0.2 parts by weight of finely divided silicon dioxide having an average particle size of 7 nm in a film-forming resin.
EP-A-035 609 relates to transparent abrasion resistant coating compositions comprising an inorganic dispersant as well as a partially condensed silanol component, but this reference neither discloses the combination of a film-forming resin having functional groups with a crosslinker, nor borosiliate glass or aluminum silicate.

Thus, there is a need in the coatings art for topcoats having good corrosion resistance when applied directly to a metallic substrate while maintaining good appearance similar to a coating applied over a primer layer. This would eliminate the need for an additional primer layer in the painting process.

### SUMMARY OF THE INVENTION

The present invention is directed to coating compositions comprising
a) a film-forming resin comprising at least one reactive functional group containing polymer and at least one curing agent having functional groups reactive with the functional group of the polymer; and
b) a plurality of particles having a particle size range of 5 to 1000 nanometers dispersed in said resin selected from aluminum silicate and borosilicate glass, the weight ratio of (b) to (a) being in the range of 0.2 to 2.0,
and to a substrate coated directly with the above coating composition, the coating composition containing a weight ratio of carbon black pigment to film-forming resin of at least 0.04, and a weight ratio of particles to film-forming resin of at least 0.2; the cured coating deposited from the coating composition having a 20 degree gloss of at least 75 units and at least 10 percent greater corrosion resistance after 250 hours salt spray exposure as compared to a similar coating with no particles.

It has been discovered that the incorporation of these particles into a film-forming resin results in a cured coating having greater corrosion resistance as compared to a cured coating deposited from a similar coating composition without these particles. According to the present invention, coating compositions containing these particles can be formulated to achieve improved corrosion resistance with little or no adverse affect on the appearance of the cured coatings.

"Corrosion" refers herein to a gradual wearing away or alteration by a chemical or electrochemical oxidizing process. Corrosion occurs in the presence of oxygen and water. "Corrosion resistance" is a measure of a material's ability to resist degradation caused by corrosion.

"Appearance" refers herein to characterization of the cured coating by 20 degree gloss and distinctness of image (DOI) measurements. A cured coating that generates high numbers from these measurements has better appearance compared to a cured coating that generates low numbers from the same measurements. Appearance is not adversely affected when the difference in 20 degree gloss and DOI measurements between two cured coatings is no more than 15 percent.

### DESCRIPTION OF THE INVENTION

The for use in the present coating compositions is one formed from the reaction of a polymer having at least one type of reactive functional group and a curing agent having functional groups reactive with the functional group of the polymer. The polymers can be, for example, acrylic, polyester, polyurethane or polyether, and can contain functional groups such as epoxy, carboxylic acid; hydroxyl, isocyanate, amide, carbamate and carboxylate groups.

The acrylic polymers, if used, are typically copolymers of acrylic acid or methacrylic acid or hydroxyalkyl esters of acrylic or methacrylic acid such as hydroxyethyl methacrylate or hydroxypropyl acrylate with one or more other polymerizable ethylenically unsaturated monomers such as alkyl esters of acrylic acid including methyl methacrylate and 2-ethyl hexyl acrylate, and vinyl aromatic compounds such as styrene, alpha-methyl styrene and vinyl toluene. The ratio of reactants and reaction conditions are selected to result in an acrylic polymer with pendant hydroxyl or carboxylic acid functionality.

Besides acrylic polymers, the curable coating composition of the present invention can contain a polyester polymer or oligomer. Such polymers may be prepared in a known manner by condensation of polyhydric alcohols and polycarboxylic acids. Suitable polyhydric alcohols include ethylene glycol, neopentyl glycol, trimethylol propane and pentaerythritol.

Suitable polycarboxylic acids include adipic acid, 1,4-cyclohexyl dicarboxylic acid and hexahydrophthalic acid. Besides the polycarboxylic acids mentioned above, functional equivalents of the acids such as anhydrides where they exist or lower alkyl esters of the acids such as the methyl esters may be used. Also, small amounts of monocarboxylic acids such as stearic acid may be used.

Hydroxyl-containing polyester oligomers can be prepared by reacting an anhydride of a dicarboxylic acid such as hexahydrophthalic anhydride with a diol such as neopentyl glycol in a 1:2 molar ratio.

Where it is desired to enhance air-drying, suitable drying oil fatty acids may be used and include those derived from linseed oil, soya bean oil, tall oil, dehydrated castor oil or tung oil.

The polyesters are made to contain free terminal hydroxyl and/or carboxyl groups which are available for further crosslinking reactions.

Polyurethane polymers containing terminal isocyanate or hydroxyl groups may also be used. The polyurethane polyols or NCO-terminated polyurethanes which can be used are those prepared by reacting polyols including polymeric polyols with polyisocyanates. The polyurea-containing terminal isocyanate or primary or secondary amine groups which can be used are those prepared by reacting polyamines including polymeric polyamines with polyisocyanates. The hydroxyl/isocyanate or amine/isocyanate equivalent ratio is adjusted and reaction conditions selected to obtain the desired terminal group. Examples of suitable polyisocyanates are those described in U.S. Pat. No. 4,046,729 at column 5, line 26 to column 6, line 28. Examples of suitable polyols are those described in U.S. Pat. No. 4,046,729 at column 7, line 52 to column 10, line 35. Examples of suitable polyamines are those described in U.S. Pat. No. 4,046,729 at column 6, line 61 to column 7, line 32 and in U.S. Pat. No. 3,799,854 at column 3, lines 13 to 50.

Curing agents suitable for use in the curable coating composition of the present invention can include aminoplast resins and phenoplast resins and mixtures thereof, as curing agents for OH, COOH, amide, and carbamate functional group containing materials. Examples of aminoplast and phenoplast resins suitable as curing agents in the curable compositions of the present invention are those described in U.S. Pat. No. 3,919,351 at col. 5, line 22 to col. 6, line 25.

Also suitable are polyisocyanates and blocked polyisocyanates as curing agents for OH and primary and/or secondary amino group-containing materials. Examples of polyisocyanates and blocked isocyanates suitable for use as curing agents in the curable compositions of the present invention are those described in U.S. Pat. No. 4,546,045 at col. 5, lines 16 to 38; and in U.S. Pat. No. 5,468,802 at col. 3, lines 48 to 60.

Anhydrides as curing agents for OH and primary and/or secondary amino group containing materials are well known in the art. Examples of anhydrides suitable for use as curing agents in the curable compositions of the present invention are those described in U.S. Pat. No. 4,798,746 at col. 10, lines 16 to 50; and in U.S. Pat. No. 4,732,790 at col. 3, lines 41 to 57.

Polyepoxides as curing agents for COOH functional group containing materials are well known in the art. Examples of polyepoxides suitable for use as curing agents in the curable compositions of the present invention are those described in U.S. Pat. No. 4,681,811 at col. 5, lines 33 to 58.

Polyacids as curing agents for epoxy functional group containing materials are well known in the art. Examples of polyacids suitable for use as curing agents in the curable compositions of the present invention are those described in U.S. Pat. No. 4,681,811 at col. 6, line 45 to col. 9, line 54.

Polyols, that is, material having an average of two or more hydroxyl groups per molecule, can be used as curing agents for NCO functional group containing materials and anhydrides and esters and are well known in the art. Examples of said polyols are those described in U.S. Pat. No. 4,046,729 at col. 7, line 52 to col. 8, line 9; col. 8, line 29 to col. 9, line 66; and in U.S. Pat. No. 3,919,315 at col. 2, line 64 to col. 3, line 33.

Polyamines can also be used as curing agents for NCO functional group containing materials and for carbonates and unhindered esters and are well known in the art. Examples of polyamines suitable for use as curing agents in the curable compositions of the present invention are those described in U.S. Pat. No. 4,046,729 at col. 6, line 61 to col. 7, line 26.

When desired, appropriate mixtures of curing agents may be used. It should be mentioned that such curable compositions can be formulated as a one-component composition where a curing agent such as an aminoplast resin and/or a blocked isocyanate compound such as those described above is admixed with other composition components. The one-component composition can be storage stable as formulated. Alternatively, compositions can be formulated as a two-component composition where, for example, a polyisocyanate curing agent such as those described above can be added to a pre-formed admixture of the other composition components just prior to application. The pre-formed admixture can comprise curing agents for example, aminoplast resins and/or blocked isocyanate compounds such as those described above.

Examples of polymers useful in forming the resin in the coating compositions of the present invention include hydroxyl functional containing acrylic and polyester copolymers combined with a polyisocyanate curing agent.

The film-forming resin is generally present in the present coating compositions in an amount greater than about 30 weight percent, such as greater than about 40 weight percent, and less than 90 weight percent, with weight percent being based on the total solid weight of the composition. For example, the weight percent of resin can be between 30 and 90 weight percent. When a curing agent is used, it is generally present in an amount of up to 70 weight percent, typically between 10 and 70 weight percent; this weight percent is also based on the total solid weight of the coating composition.

The present compositions can be formed from film-forming resins that are liquid, that is, waterborne or solvent borne systems. Typically, the compositions contain as diluents organic solvents and mixtures of water and organic solvents. Organic solvents in which the present coating compositions may be dispersed include, for example, alcohols, ketones, aromatic hydrocarbons, glycol ethers, esters or mixtures thereof. The diluent is generally present in amounts ranging from 5 to 80 weight percent based on total weight of the composition, such as 30 to 50 percent.

The coating compositions of the present invention can also comprise optional ingredients such as those well known in the art of formulating surface coatings. Such optional ingredients can comprise, for example, surface active agents, flow control agents, thixotropic agents, fillers, anti-gassing agents, organic co-solvents, catalysts, antioxidants, light stabilizers, UV absorbers and other customary auxiliaries. Any such additives known in the art can be used, absent compatibility problems. Non-limiting examples of these materials and suitable amounts are described in U.S. Patent Nos. 4,220,679; 4,403,003; 4,147,769; and 5,071,904. Typically each of the optional ingredients can be present in amounts as low as 0.01 weight percent and as high as 20.0 weight percent. Usually the total amount of optional ingredients will range for 0.01 to 25 weight percent. The weight percentage is based on total weight of the composition.

Examples of inorganic particles include aluminum silicate and borosilicate glass. Mixtures of any of the above particles can be used. In one embodiment, the particles in the coating compositions comprise aluminum silicate. In another embodiment, the particles in the coating compositions comprise borosilicate glass.

The particles listed above are widely commercially available. For example, aluminum silicate particles from are available NanoMaterials Research Corporation and borosilicate glass, sold as SUNSPHERES, from Suncolor Corporation. It will be appreciated that many commercially available products are actually composites or alloys of one or more materials. Such particles are equally within the scope of the present invention.

The particles used in the present invention have a particle size range of 5 to 1000 nanometers, typically 5 to 700 nanometers-. Any of the particles listed above can be used in any size within these ranges according to the present invention. In one embodiment, the particles such as aluminum silicate have a particle size range of 10 to 400 nanometers. In another embodiment, the particles such as borosilicate glass spheres have a particle size range of 5 to 600 nanometers. Particle size can be determined according to any method known in the art, such as by a conventional particle size analyzer. For particle sizes smaller than 1000 nanometers (1 micron), transmissional electron microscopy ("TEM") can be used.

The particles used in the present invention have a surface area of between 5 and 150 square meters per gram. Any of the particles listed above can be used within these ranges according to the present invention. In one embodiment, the particles such as aluminum silicate have a surface area between 25 and 120 square meters per gram. In another embodiment, the particles such as borosilicate glass spheres have a surface area between 13 and 16 square meters per gram. "Surface area" refers to the total area of exposed surface (area of contact between two different states of matter) of a finely divided solid including irregularities of all types.

Surface area can be determined according to any method known in the art, such as by BET.

The shape or morphology of the particles can vary depending on the type of particle or particles selected. For example, generally spherical particles, such as crystalline materials, solid beads, microbeads, or hollow spheres, can be used, as can particles that are plate-like, cubic or acicular (that is, elongated or fibrous). The particles can also have a random or non-uniform morphology. In addition, the particles can have an internal structure that is hollow, porous or void free, or any combination, such as a hollow center with porous or solid walls. It will be appreciated that different particle shapes may be more suitable for one application over another. Particle shape may be irrelevant, however, for other applications. It will be appreciated that combinations of particles having different morphologies can be used to give the desired characteristics to the final coating.

The particles used in the present invention may be a mixture of particles of different sizes. The mixture may comprise 10 to 50 weight percent of particles having a particle size within the range of 5 up to 400 nanometers and 50 to 90 weight percent of particles having a particle size within the range of 400 to 1000 nanometers. In one embodiment, the particles such as a mixture of borosilicate glass spheres have different particle sizes. The mixture comprises 10 to 50 weight percent of the particles having a particle size within the range of 5 up to 400 nanometers and 50 to 90 weight percent of the particles having a particle size within the range of 400 to 1000 nanometers.

The particles are typically present in the curable coating composition of the present invention in a weight ratio of particles to film-forming resin of 0.2 to 2.0. In one embodiment, the coating composition contains a weight ratio of carbon black pigment to film-forming resin of at least 0.04 and a weight ratio of particles to film-forming resin of at least 0.25. It will be appreciated that improvement in corrosion resistance will increase as the concentration of particles increases. The tests described in the Example section below can be used by those skilled in the art to determine what weight percent of particles will give the desired level of protection.

Both the size of the particles used as well as the particle concentration can affect not only the corrosion resistance but also the appearance of the cured coating. The coating compositions of the present invention contain relatively high concentrations of particles with no adverse affect on appearance of a cured coating as compared to a similar coating with no particles. One skilled in the art can optimize particle size and concentration to achieve the desired level of corrosion resistance without adversely affecting appearance or other mechanical properties of the cured coatings. Mixtures of particles having different sizes may be particularly suitable for a given application.

The particles of the present invention can be added at any time during the formulation of the coating composition and should form a stable suspension in the film-forming resin. For example, curable coating compositions of the present invention can be prepared by first blending the film-forming resin, the plurality of particles and diluent in a closed container that contains ceramic grind media. The blend is subject to high shear stress conditions, such as by shaking it on a high speed shaker for several hours. The blend is subject to high shear stress until a homogeneous dispersion of particles remains suspended in the film-forming resin with no visible particle settle in the container. It should be understood that, if desired, any mode of applying stress to the blend can be utilized, so long as sufficient stress is applied to achieve a stable suspension of the particles in the film-forming resin.

The coating compositions of the present invention may be used to form a single coating, for example, a monocoat, a clear topcoat or a basecoat in a two-layered system or both; or as one or more layers of a multi-layered system including a clear topcoat composition, a colorant layer and/or a basecoat composition, and/or a primer layer.

As would be understood by one skilled in the art, coating film thickness and curing temperatures and conditions will depend upon the type of coating layer to be formed, i.e., a primer coating, a basecoat, a clear topcoat, a monocoat; as well as the coating composition itself, i.e., whether thermosetting or thermoplastic, whether ambient or thermally curable, and, if thermosetting, the type of curing reaction required.

The coating compositions of the invention can be applied by any conventional method such as brushing, dipping, flow coating, roll coating, conventional and electrostatic spraying. Spray techniqu es are most often used. Typically, film thickness for liquid coatings is at least 0.5 mils and can range between 0.5 and 5 mils.

Several coating compositions can be cured at ambient temperature, such as those having a polyisocyanate or polyanhydride curing agent, or they can be cured at minimally elevated temperatures to hasten the cure. An example would be forced air curing in a down draft booth at about 40°C to 60°C, which is common in the automotive refinish industry. The ambient temperature curable compositions are usually prepared as a two (2) package system ("2K") in which the ambient curing agent ("crosslinker pack") is kept separate from the film-forming resin ("resin pack") containing the reactive functional group. The packages are combined shortly before application.

The thermally curable coating compositions such as those using blocked isocyanate, aminoplast, phenoplast, polyepoxide or polyacid curing agent can be prepared as a one-package system ("1K"). These compositions are cured at elevated temperatures, typically for 1 to 30 minutes at about 250°F to about 450°F (121°C to 232°C) with temperature primarily dependent upon the type of substrate used. Dwell time (i.e., time that the coated substrate is exposed to elevated temperature for curing) is dependent upon the cure temperatures used as well as wet film thickness of the applied coating composition. For example, coated automotive elastomeric parts require a long dwell time at a lower cure temperature (e.g., 30 minutes at 250°F (121°C)), while coated aluminum beverage containers require a very short dwell time at a very high cure temperature (e.g., 1 minute at 375°F (191 °C)). 1 K systems can also be cured by exposure to actinic radiation, such as UV light or electron beam.

The coating compositions of the present invention can be applied to a variety of substrates, for example, automotive substrates such as fenders, hoods, doors and bumpers, and industrial substrates such as household appliances, including washer and dryer panels and lids, refrigerator doors and side panels, lighting fixtures and metal office furniture. Such automotive and industrial substrates can be metallic, for example, aluminum, galvanized steel and untreated steel.

The coating compositions of the invention are particularly useful as topcoats and/or basecoats in color-plus-clear compositions. The coating compositions of the invention in the pigmented form can be applied directly to a substrate to form a colorcoat (either a colored basecoat or a colored topcoat). When used as a colored topcoat, coating thicknesses of 12.7 to 127 µm (0.5 to 5.0 mils) are usual. When used as a colored basecoat, thicknesses of 2.54 - 26.4 µm (0.1 to 2.0 mils) are usual.

Accordingly, the present invention is further directed to a metallic substrate, such as untreated steel, coated directly with one or more of the present compositions. The compositions, and manner of applying the same, are as described above.

In one embodiment, the present invention is directed to a method for improving the corrosion resistance of a substrate comprising applying the present compositions to at least a portion of the substrate. Application can be by any means known in the art to the thicknesses described above. The cured coating has at least 10 percent greater, or at least 50 percent greater corrosion resistance when deposited directly on untreated steel as compared to a similar coating with no particles.

In another embodiment, the present invention is directed to a cured coating that has no more than 15 percent 20 degree gloss and DOI change as compared to a similar coating with no particles.

Appearance of the cured coating is characterized by 20 degree gloss and distinctness of image (DOI). These tests are known in the art as techniques to measure appearance of a cured coating. A cured coating generating high numbers from 20 degree gloss and DOI measurements has better appearance compared to a cured coating generating low numbers from the same measurements. Appearance is not adversely affected when the difference in 20 degree gloss and DOI between two cured coatings is no more than 15 percent. For example, the phrase "does not adversely affect appearance" means loss of gloss and DOI of the cured coating of the present invention would be no more than 15 percent compared to a similar coating with no particles.

As used herein, the term "corrosion" refers to a gradual wearing away or alteration by a chemical or electrochemical oxidizing process. Metallic substrates corrode in the presence of oxygen and water. The corrosion process is caused by a flow of electricity from one metal to another metal, and the presence of an electrolyte, such as salt, is essential for the process to occur. "Corrosion resistance" is the measurement of corrosion prevention on the metal substrate.

A useful test known in the art to measure the corrosion resistance of coated substrate is ASTM B117 (Salt Spray Test). In this test, the coated substrate is scribed with a knife to expose the bare metal substrate. The scribed substrate is placed into a test chamber where an aqueous salt solution is continuously misted onto the substrate. The chamber is maintained at constant temperature. In one embodiment of the present invention, the coated substrate is exposed to the salt spray environment for 250 hours. After exposure, the coated substrate is removed from the test chamber and evaluated for corrosion along the scribe. Corrosion is measured by "scribe creep", defined as the total distance the corrosion has traveled across the scribe measured in millimeters.

The coatings formed according to the present invention, when cured, can have greater corrosion resistance properties as compared to a similar coating with no particles. "Greater corrosion resistance" is defined as less scribe creep as measured in millimeters compared to a similar coating with no particles.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. As used herein, the term "polymer" refers to oligomers and both homopolymers and copolymers, and the prefix "poly" refers to two or more.

Illustrating the invention are the following examples that are not to be considered as limiting the invention to their details. All parts and percentages in the examples, as well as throughout the specification, are by weight unless otherwise indicated.

### EXAMPLES

The following examples are intended to illustrate the invention, and should not be construed as limiting the invention in any way.

### Example 1

Particles were formulated into the resin-containing portion of the two-pack liquid coating compositions of Samples 2 through 5, the components of which are listed in grams in Table 1. By way of comparison with Samples 2 through 5, Sample 1 was prepared with no particles by sequential mixing of each component using a Cowles blade.

The particles in Samples 2 through 5 were incorporated by first mixing the particles with Joncryl 500, polyester resin, lrcogel 906, DT870, and Solsperse 32500 in the amounts shown in Table 1. This mixture was milled in an eight (8) ounce sealed jar containing zircoa grind media for five (5) hours on a high speed shaker. After this, additional ingredients of Chisorb 328, Tinuvin 292, Dibutyl Tin Dilaurate, Vanox ZMTI, and n-Butyl acetate were added to the mixture and milled on a high speed shaker for an additional two (2) hours. After milling was complete, the material was removed from the sealed jar and filtered to remove the grind media. Toner F3547 was then added to the milled mix at the amount shown in Table 1. This mixture is named the "Resin Pack". The "Crosslinker Pack" was prepared by mixing the components in the amounts shown in Table 1.

**Table 1**

| | Sample 1* | Sample 2 | Sample 3 | Sample 4 | Sample 5 |
|---|---|---|---|---|---|
| "Resin Pack" | | | | | |
| Joncryl 500¹ | 17.21 | 14.49 | 12.42 | 9.71 | 8.79 |
| Polyester resin² | 13.02 | 10.96 | 9.40 | 7.34 | 6.65 |
| UVT Sunspheres 0.05 KAT 25³ | --- | 18.66 | 32.76 | 50.94 | 57.50 |
| Ircogel 906⁴ | 1.50 | 1.26 | 1.08 | 0.85 | 0.77 |
| DT870⁵ | --- | 6.34 | 11.26 | 17.70 | 19.92 |
| Solsperse 32500⁸ | --- | 0.27 | 0.49 | 0.75 | 0.85 |
| Chisorb 328⁷ | 1.29 | 1.09 | 0.93 | 0.73 | 0.66 |
| Tinuvin 292⁸ | 0.85 | 0.72 | 0.61 | 0.48 | 0.44 |
| Dibutyl tin dilaurate⁹ | 0.09 | 0.07 | 0.06 | 0.05 | 0.04 |
| Vanox ZMTI¹⁰ | 1.63 | 1.37 | 1.17 | 0.92 | 0.83 |
| n-Butyl acetate" | 17.53 | 14.76 | 12.65 | 9.89 | 8.95 |
| Toner F3547¹² | 44.94 | 37.84 | 32.44 | 25.35 | 22.96 |
| "Crosslinker Pack" | | | | | |
| Tolonate HDTLV¹³ | 16.79 | 14.14 | 12.12 | 9.47 | 8.58 |
| Luxate IT1073¹⁴ | 16.96 | 14.28 | 12.24 | 9.56 | 8.66 |
| Silquest A-187¹⁵ | 6.02 | 5.07 | 4.34 | 3.39 | 3.07 |
| DT870 | 22.18 | 18.67 | 16.01 | 12.51 | 11.33 |

| | | | | | |
|---|---|---|---|---|---|
| ¹Joncryl 500, polyester resin from SC Johnson & Son. ²Polyester resin, formed from isostearic acid, 1,4-cyclohexanedicarboxylic acid, and trimethylol propane (39.2 /23.8 /37.0 weight ratio) at 93% solids in methyl n-amyl ketone and xylene (56.8 / 43.2 weight ratio). ³UVT Sunspheres 0.05 KAT25, borosilicate glass particles from Suncolor Corporation. ⁴lrcogel 906, rheology control additive from Lubrizol Corporation. ⁵DT870, solvent blend from PPG Industries, Inc. ⁶Solsperse 32500, dispersant from Avecia. ⁷Chisorb 328, acrylic resin from Chitec Chemical Company. ⁸Tinuvin 292, liquid hindered amine light stabilizer from CIBA Specialty Chemicals. ⁹Dibutyl tin dilaurate, tin catalyst from Air Products & Chemicals, Inc. ¹⁰Vanox ZMTI, antioxidant from RT Vanderbilt. ¹¹n-Butyl acetate, solvent from BASF Corporation. ¹²Toner F3547, Delfleet Evolution Carbon Black Tinter from PPG Industries, Inc. ¹³Tolonate HDTLV, hexamethylene diisocyanate trimer from Rhodia. ¹⁴Luxate IT1073, polyisocyanate from Lyondell. ¹⁵Silquest A-187, silane from Crompton Corp. * Comparative example | | | | | |

The "Resin Pack" was co-blended with the "Crosslinker Pack" just prior to substrate application via handspray using a DeVilbiss GTI HVLP spray gun with a 1.4 tip. Samples 1 through 5 were spray applied directly to APR10288 cold roll steel test panels; APR18661 E60 EZG 60G test panels; and APR21047 aluminum 2024T3 unpolish test panels, available from ACT Laboratories. One pass was applied followed by an ambient flash for ten (10) minutes and then a second pass was applied. A target dry film thickness of 1.5 to 2.8 mils was applied. All coated substrates were allowed to cure at ambient conditions for seven (7) days prior to testing.

In addition to the coatings from Table 1, the same substrates were coated with a primer and topcoat system commonly used as a standard in the industry. The primer, commercially available from PPG industries, Inc. as DP40LF Non Sanding Epoxy Primer was mixed with DP401 LF Epoxy Primer Catalyst at a 2 to 1 volumetric ratio per instructions on the technical data sheet and spray applied using conventional spray equipment. The applied coating was allowed to flash at ambient conditions for 30 minutes prior to spray application of Delfleet Evolution Topcoat, also commercially available from PPG Industries, Inc. The topcoat was prepared per instruction of the technical data sheet by mixing Delfleet Evolution F3547 Carbon Black Tinter with F3115 HS High Build Binder at a 1 to 1 weight ratio. This mixed package was then blended with F3260 HS Hardener and F3330 Medium Compliant Thinner at a 3 to 1 to 1 volumetric ratio. The blended topcoat was spray applied using a DeVilbiss GTI HVLP spray gun with a 1.4 tip at a target dry film thickness of 1.0 to 1.5 mils.

The coated substrates were tested for 20 degree gloss, distinctness of image (DOI) and 250 hours salt spray resistance. The 20 degree gloss was measured using a BYK Gardner micro-TRI-gloss instrument. Distinctness of image (DOI) was measured using a "C-Box" Model GB11-8 from Instruments for Research and Industries (I²R) of Cheltenham, PA.

The procedure for measuring DOI involved placing the coated substrate on a flat surface underneath the C-Box. The light inside the C-Box was turned on so the reflectance of the coated surface could be used to read the image of Landolt rings ("C's") on the underside of the C-Box. The coated surface was visually examined at approximately 15 to 30 degrees from normal at a distance of 25 to 30 centimeters (10 to 12 inches). Each series of rings has a corresponding numeric value (10-100 in increments of 10) with 100 representing the smallest ring size and 10 representing the largest ring size. The coated substrate was assigned a DOI measurement by first determining the highest value where an entire group of "C's" was discernible in the reflectance of the coated surface. Second, the next smaller size pattern was observed. If there were only a few openings of the "C's" visible, then a rating of the entirely visible pattern was recorded. If at least 50 percent of the "C's" openings were visible in the smaller size pattern, then a rating halfway between the two patterns was recorded.

Salt spray resistance was tested as described in ASTM B117. Panels removed from salt spray testing were measured for scribe creep across the scribe. Scribe creep values were reported as an average of six (6) measurements. Results from the above-mentioned tests are reported in the following Table 2.

**Table 2**

| | | | Salt Spray Resistance Scribe creep in millimeters | | |
|---|---|---|---|---|---|
| | 20 degree gloss | DOI | APR 10288 CRS | APR 18661 EZG 60G | APR 21047 Aluminum |
| Primer / Topcoat Standard | 86 | 80 | 10.4 | 4.3 | 0.7 |
| Sample 1 (Comparative) | 87.5 | 100 | 17 | 7.8 | 2.0 |
| Sample 2 | 85.3 | 90 | 14.1 | 2.6 | 0.8 |
| Sample 3 | 83.3 | 100 | 12 | 3.8 | 0.6 |
| Sample 4 | 83.1 | 100 | 11 | 6.0 | 1.4 |
| Sample 5 | 83.1 | 85 | 10.8 | 6.5 | 1.0 |

As can be seen in Table 2, the use of the borosilicate glass particles in the coating compositions (Samples 2 through 5) gave improved salt spray resistance as compared to Sample 1 with no borosilicate glass particles. In addition, appearance of the cured coatings as measured by 20 degree gloss and DOI was not adversely affected. There was no more than 15 percent difference in these measurements between the cured coatings with particles (Samples 2 through 5) and the cured coating with no particles (Sample 1).

### Example 2

Two-pack liquid coating compositions were prepared using the components and amounts (in grams) shown in Table 3. Sample 6 was a comparative coating composition containing no particles. Sample 6 was prepared by sequential mixing of each component using a Cowles blade. Sample 7 was prepared by milling all components in the "Resin Pack" excluding Toner F3547 in an eight (8) ounce sealed jar containing zircoa grind media for five (5) hours on a high speed shaker. The milled mixture was removed from the sealed jar and filtered to remove the grind media. Toner F3547 was then added to the milled mix at the amount shown in Table 3. This mixture is named the "Resin Pack". The "Resin Pack" was co-blended with the "Crosslinker Pack" just prior to substrate application.

**Table 3**

| | Sample 6* | Sample 7 |
|---|---|---|
| "Resin Pack" | | |
| Joncryl 500 | 20.58 | 11.27 |
| Polyester resin | 13.90 | 7.61 |
| Aluminum Silicate #BPT0104-2¹ | --- | 48.78 |
| DT870 | --- | 14.76 |
| Tinuvin 292 | 1.03 | 0.56 |
| Tinuvin 328² | 1.54 | 0.84 |
| Dibutyl tin dilaurate | 0.10 | 0.06 |
| n-Butyl acetate | 53.75 | 14.47 |
| Byk 300³ | 0.03 | 0.02 |
| Vansil W-10⁴ | 4.51 | --- |
| Shieldex AC-5⁵ | 4.52 | --- |
| Toner F3547 | 25.35 | 29.42 |
| "Crosslinker Pack" | | |
| Tolonate HDTLV | 20.08 | 10.89 |
| Luxate IT1073 | 20.28 | 11.10 |
| Silquest A-187 | 3.28 | 1.80 |
| DT870 | 42.42 | 10.13 |

| | | |
|---|---|---|
| ¹ Aluminum Silicate #BPT0104-2 from Nanomaterials Research Corporation. ² Tinuvin 328, UV absorber from Ciba Specialty Chemicals. ³ Byk 300, flow additive from Byk Chemie. ⁴ Vansil W-10, extender from RT Vanderbilt. ⁵ Shieldex AC-5, calcium silica pigment from Grace Division. * Comparative example | | |

Samples 6 and 7 were applied to the substrates from Example 1 in the manner described. The coated substrates were tested as described in Example 1, and results from these tests are reported in the following Table 4.

**Table 4**

| | | | Salt Spray Resistance Scribe creep in millimeters | | |
|---|---|---|---|---|---|
| | 20 degree gloss | DOI | APR 10288 CRS | APR 18661 EZG 60G | APR 21047 Aluminum |
| Sample 6 (Comparative) | 82 | 90 | 34.5 | Total delamination | 29.0 |
| Sample 7 | 77 | 80 | 21.2 | 28.5 | 0.5 |

As can be seen in Table 4, the addition of aluminum silicate particles to Sample 7 improved salt spray resistance as compared to Sample 6 with no aluminum silicate particles. Also, appearance as defined by 20 degree gloss and DOI was not adversely affected. There was no more than 15 percent difference in each of these measurements between the two cured coatings.

### Example 3

Two-pack liquid coating compositions were prepared using the components and amounts (in grams) shown in Table 5. Sample 8 was a comparative coating composition containing no particles. Sample 8 was prepared by sequential mixing of each component using a Cowles blade. Sample 9 was prepared in the same manner as Sample 7 in Example 2.

**Table 5**

| | Sample 8 * | Sample 9 |
|---|---|---|
| "Resin Pack" | | |
| Joncryl 500 | 20.58 | 14.24 |
| Polyester resin | 13.9 | 9.62 |
| Aluminum Silicate #BPT0104-2 | -- | 48.51 |
| DT870 | --- | 18.66 |
| Tinuvin 292 | 1.03 | 0.71 |
| Tinuvin 328 | 1.54 | 1.07 |
| Dibutyl tin dilaurate | 0.10 | 0.07 |
| n-Butyl acetate | 3.97 | 18.42 |
| Byk 300 | 0.03 | 0.02 |
| Vansil W-10 | 4.51 | 3.12 |
| Shieldex AC-5 | 4.52 | 3.13 |
| Toner F3547 | 53.75 | 37.20 |
| "Crosslinker Pack" | | |
| Tolonate HDTLV | 20.08 | 13.90 |
| Luxate IT1073 | 20.28 | 14.03 |
| Silquest A-187 | 3.28 | 2.27 |
| DT870 | 42.42 | 10.69 |

| | | |
|---|---|---|
| * Comparative example | | |

Samples 8 and 9 were applied to the substrates from Example 1 in the manner described. The coated substrates were tested as described in Example 1, and results from these tests are reported in the following Table 6.

**Table 6**

| | | | Salt Spray Resistance Scribe creep in millimeters | | |
|---|---|---|---|---|---|
| | 20 degree gloss | DOI | APR 10288 CRS | APR 18661 EZG 60G | APR 21047 Aluminum |
| Sample 8 (Comparative) | 78.7 | 90 | 27.7 | 23.2 | Total delamination |
| Sample 9 | 81.3 | 80 | 11.4 | 10.9 | 9.7 |

As can be seen in Table 6, the addition of aluminum silicate particles to Sample 9 improved salt spray resistance as compared to Sample 8 with no aluminum silicate particles. Also, appearance as defined by 20 degree gloss and DOI was not adversely affected. There was no more than 15 percent difference in each of these measurements between the two cured coatings.

### Example 4

Two-pack liquid coating compositions were prepared using the components and amounts (in grams) shown in Table 7. Sample 10 was a comparative coating composition containing no particles. Sample 10 was prepared by sequential mixing of each component using a Cowles blade. Sample 11 was prepared in the same manner as Sample 7 in Example 2.

**Table 7**

| | Sample 10* | Sample 11 |
|---|---|---|
| "Resin Pack" | | |
| Joncryl 500 | 18.74 | 11.22 |
| Polyester resin | 12.66 | 7.59 |
| UVT Sunspheres 0.05 KAT 25 | --- | --- |
| UVT Sunspheres 0.05¹ | --- | 52.94 |
| DT870 | --- | 14.71 |
| Solsperse 32500 | --- | 0.47 |
| Tinuvin 292 | 0.94 | 0.56 |
| Tinuvin 328 | 1.40 | 0.84 |
| Dibutyl tin dilaurate | 0.09 | 0.06 |
| Vanox ZMTI | 1.49 | 1.47 |
| n-Butyl acetate | 3.61 | 10.59 |
| Byk 300 | 0.03 | 0.02 |
| Vansil W-10 | 4.12 | --- |
| Shieldex AC-5 | 4.11 | 1.65 |
| Toner F3547 | 48.64 | 23.91 |
| "Crosslinker Pack" | | |
| Tolonate HDTLV | 18.28 | 10.95 |
| Luxate IT1073 | 18.47 | 11.06 |
| Silquest A-187 | 2.99 | 2.03 |
| DT870 | 39.13 | 19.54 |

| | | |
|---|---|---|
| ¹ UVT Sunspheres 0.05, borosilicate glass particles from Suncolor Corporation. * Comparative example | | |

Samples 10 and 11, as well as the primer and topcoat standard described in Example 1, were applied to the substrates from Example 1 in the manner described. The coated substrates were tested as described in Example 1, and results from these tests are reported in the following Table 8.

**Table 8**

| | | | Salt Spray Resistance Scribe creep in millimeters | | |
|---|---|---|---|---|---|
| | 20 degree gloss | DOI | APR 10288 CRS | APR 18661 EZG 60G | APR 21047 Aluminum |
| Primer / Topcoat Standard | -83.3 | 40 | 8.6 | 8.5 | 0.5 |
| Sample 10 (Comparative) | 78.5 | 95 | 23.5 | 16.2 | 1.7 |
| Sample 11 | 84.9 | 100 | 17.9 | 6.3 | 2.3 |

As can be seen in Table 8, the addition of borosilicate glass particles to Sample 11 improved salt spray resistance as compared to Sample 10 with no borosilicate glass particles. Also, appearance as defined by 20 degree gloss and DOI was not adversely affected. There was no more than 15 percent difference in each of these measurements between the two cured coatings.

Whereas particular embodiments of this invention have been described above for purposes of illustration, it will be evident to those skilled in the art that numerous variations of the details of the present invention may be made without departing from the invention as defined in the appended claims.

## Claims

1. A coating composition comprising:
a) a film-forming resin comprising at least one reactive functional group containing polymer and at least one curing agent having functional groups reactive with the functional group of the polymer; and
b) a plurality of particles of borosilicate glass having a particle size range of 5 to 1000 nanometers dispersed in said resin and,
the weight ratio of (b) to (a) being in the range of 0.2 to 2.0.

2. The coating composition of Claim 1, wherein the particles have a particle size range of 5 to 700 nanometers.

3. The coating composition of Claim 1, wherein the particles have a surface area of between 5 and 150 square meters per gram.

4. The coating composition of Claim 1, wherein said plurality of particles is a mixture of particles of different sizes.

5. The coating composition of claim 4, wherein the mixture comprises 10 to 50 percent by weight of particles having a particle size within the range of 5 up to 400 nanometers and 50 to 90 percent by weight of particles having a particle size within the range of 400 to 1000 nanometers.

6. The coating composition of Claim 1, wherein said particles are spherical.

7. The coating composition of Claim 1, wherein said particles are non-uniform in morphology.

8. The coating composition of Claim 1, wherein said particles are plate-like.

9. The coating composition of Claim 1, wherein the polymer is selected from the group consisting of acrylic polymers, polyester polymers, polyurethane polymers, and polyether polymers.

10. The coating composition of Claim 9, wherein the polymer comprises reactive functional groups selected from the group consisting of epoxy groups, carboxylic acid groups, hydroxyl groups, isocyanate groups, amide groups, carbamate groups, carboxylate groups and mixtures thereof.

11. A metallic substrate coated directly with a topcoat of a coating composition comprising:
a) a film-forming resin comprising at least one reactive functional group containing polymer and at least one curing agent having functional groups reactive with the functional group of the polymer; and
b) a plurality of particles having a particle size range of 5 to 1000 nanometers dispersed in said resin selected from aluminum silicate and borosilicate glass,
the weight ratio of (b) to (a) being in the range of 0.2 to 2.0;
the coating composition containing a weight ratio of carbon black pigment to film-forming resin of at least 0.04, and a weight ratio of particles to film-forming resin of at least 0.2; the cured coating deposited from the coating composition having a 20 degree gloss of at least 75 units and at least 10 percent greater corrosion resistance after 250 hours salt spray exposure as compared to a similar coating with no particles.

12. The substrate of Claim 11, wherein the corrosion resistance is at least 50 percent greater.

13. The substrate of Claim 11, wherein said metallic substrate is selected from the group consisting of aluminum, galvanized steel, and untreated steel.

14. The substrate of Claim 13, wherein said metallic substrate is untreated steel.

15. The substrate of Claim 11, wherein the cured coating is at least 12.7 µm (0.5 mils) thick.

16. The substrate of Claim 15, wherein the cured coating is between 12.7 µm and 127 µm (0.5 and 5.0 mils) thick.

17. A method for improving the corrosion resistance of a metallic substrate comprising directly applying to at least a portion of the metallic substrate as a topcoat a coating composition comprising
a) a film-forming resin comprising at least one reactive functional group containing polymer and at least one curing agent having functional groups reactive with the functional group of the polymer; and
b) a plurality of particles having a particle size range of 5 to 1000 nanometers dispersed in said resin selected from aluminum silicate and borosilicate glass,
the weight ratio of (b) to (a) being in the range of 0.2 to 2.0.

18. The coated substrate of Claim 11, wherein the resultant cured coating, has no more than 15 percent 20 degree gloss and DOI change as compared to a similar coating with no particles.

19. The coated substrate of Claim 11, wherein the resultant cured coating, when deposited directly on untreated steel substrate has at least 10 percent greater corrosion resistance as compared to a similar coating with no particles.

20. The coated substrate of Claim 19, wherein the corrosion resistance is at least 50 percent greater.

## Patentansprüche

1. Beschichtungszusammensetzung, enthaltend:
a) ein filmbildendes Harz, das wenigstens ein Polymer mit reaktiven funktionellen Gruppen und wenigstens ein Härtungsmittel enthält, das funktionelle Gruppen aufweist, die mit den funktionellen Gruppen des Polymers reaktiv sind, und
b) eine Mehrzahl von Teilchen von Borosilicatglas mit einem Teilchengrößenbereich von 5 bis 1000 nm, die in diesem Harz dispergiert sind,
wobei das Gewichtsverhältnis von (b) zu (a) im Bereich von 0,2 bis 2,0 liegt.

2. Beschichtungszusammensetzung nach Anspruch 1, wobei die Teilchen einen Teilchengrößenbereich von 5 bis 700 nm aufweisen.

3. Beschichtungszusammensetzung nach Anspruch 1, wobei die Teilchen eine Oberfläche zwischen 5 und 150 m²/g aufweisen.

4. Beschichtungszusammensetzung nach Anspruch 1, wobei diese Mehrzahl von Teilchen eine Mischung von Teilchen unterschiedlicher Größen ist.

5. Beschichtungszusammensetzung nach Anspruch 4, wobei die Mischung 10 bis 50 Gew.-% von Teilchen mit einer Teilchengröße im Bereich von 5 bis 400 nm und 50 bis 90 Gew.-% von Teilchen mit einer Teilchengröße im Bereich von 400 bis 1000 nm enthält.

6. Beschichtungszusammensetzung nach Anspruch 1, wobei diese Teilchen sphärisch sind.

7. Beschichtungszusammensetzung nach Anspruch 1, wobei diese Teilchen bezüglich der Morphologie nicht einheitlich sind.

8. Beschichtungszusammensetzung nach Anspruch 1, wobei diese Teilchen plättchenförmig sind.

9. Beschichtungszusammensetzung nach Anspruch 1, wobei das Polymer ausgewählt ist aus der Gruppe bestehend aus Acrylpolymeren, Polyesterpolymeren, Polyurethanpolymeren und Polyetherpolymeren.

10. Beschichtungszusammensetzung nach Anspruch 9, wobei das Polymer reaktive funktionelle Gruppen aufweist, die ausgewählt sind aus der Gruppe bestehend aus Epoxygruppen, Carbonsäuregruppen, Hydroxylgruppen, Isocyanatgruppen, Amidgruppen, Carbamatgruppen, Carboxylatgruppen und Mischungen davon.

11. Metallisches Substrat, das direkt mit einer Deckschicht einer Beschichtungszusammensetzung beschichtet ist, die enthält:
a) ein filmbildendes Harz, das wenigstens ein Polymer mit reaktiven funktionellen Gruppen und wenigstens ein Härtungsmittel enthält, das funktionelle Gruppen aufweist, die mit den funktionellen Gruppen des Polymers reaktiv sind, und
b) eine Mehrzahl von Teilchen mit einem Teilchengrößenbereich von 5 bis 1000 nm, die in diesem Harz dispergiert sind und aus Aluminiumsilicat und Borosilicatglas ausgewählt sind,
das Gewichtsverhältnis von (b) zu (a) im Bereich von 0,2 bis 2,0 liegt, wobei die Beschichtungszusammensetzung ein Gewichtsverhältnis von Rußpigmenten zu film bilden dem Harz von wenigstens 0,04 und ein Gewichtsverhältnis von Teilchen zu filmbildendem Harz von wenigstens 0,2 aufweist und die gehärtete Beschichtung, die aus der Beschichtungszusammensetzung abgeschieden ist, einen 20°-Glanz von wenigstens 75 Einheiten und eine mindestens 10% größere Korrosionsbeständigkeit nach 250 h Aussetzen an Salzsprühung im Vergleich zu einer ähnlichen Beschichtung ohne Teilchen aufweist.

12. Substrat nach Anspruch 11, wobei die Korrosionsbeständigkeit wenigstens 50% größer ist.

13. Substrat nach Anspruch 11, wobei dieses metallische Substrat ausgewählt ist aus der Gruppe bestehend aus Aluminium, galvanisiertem Stahl und unbehandeltem Stahl.

14. Substrat nach Anspruch 13, wobei dieses metallische Substrat unbehandelter Stahl ist.

15. Substrat nach Anspruch 11, wobei die gehärtete Beschichtung wenigstens 12,7 µm (0,5 Mil) dick ist.

16. Substrat nach Anspruch 15, wobei die gehärtete Beschichtung zwischen 12,7 µm und 127 µm (0,5 und 5,0 Mil) dick ist.

17. Verfahren zur Verbesserung der Korrosionsbeständigkeit eines metallischen Substrats, umfassend unmittelbares Aufbringen auf wenigstens einem Teil des metallischen Substrats einer Beschichtungszusammensetzung als Decklack, enthaltend:
a) ein filmbildendes Harz, das wenigstens ein Polymer mit reaktiven funktionellen Gruppen und wenigstens ein Härtungsmittel enthält, das funktionelle Gruppen aufweist, die mit den funktionellen Gruppen des Polymers reaktiv sind, und
b) eine Mehrzahl von Teilchen mit einem Teilchengrößenbereich von 5 bis 1000 nm, die in diesem Harz dispergiert sind und aus Aluminiumsilicat und Borosilicatglas ausgewählt sind,
wobei das Gewichtsverhältnis von (b) zu (a) im Bereich von 0,2 bis 2,0 liegt.

18. Beschichtetes Substrat nach Anspruch 11, wobei die resultierende gehärtete Beschichtung eine Änderung des 20°-Glanzes und des DOI von nicht mehr als 15% im Vergleich zu einer ähnlichen Beschichtung ohne Teilchen aufweist.

19. Beschichtetes Substrat nach Anspruch 11, wobei die resultierende gehärtete Beschichtung, wenn sie direkt auf ein unbehandeltes Stahlsubstrat aufgebracht wird, eine wenigstens 10% größere Korrosionsbeständigkeit im Vergleich zu einer ähnlichen Beschichtung ohne Teilchen aufweist.

20. Beschichtetes Substrat nach Anspruch 19, wobei die Korrosionsbeständigkeit wenigstens 50% größer ist.

## Revendications

1. Composition de revêtement comprenant :
a) une résine formant un film, comprenant au moins un polymère contenant un groupe fonctionnel réactif et au moins un agent de durcissement ayant des groupes fonctionnels réagissant avec le groupe fonctionnel du polymère, et
b) une pluralité de particules de verre borosilicaté ayant une plage de tailles de particule de 5 à 1000 nanomètres, dispersées dans ladite résine, et
le rapport de poids de (b) à (a) étant de l'ordre de 0,2 à 2,0.

2. Composition de revêtement de la revendication 1, dans laquelle les particules ont une plage de tailles de particule de 5 à 700 nanomètres.

3. Composition de revêtement de la revendication 1, dans laquelle les particules ont une aire de surface comprise entre 5 et 150 mètres carrés par gramme.

4. Composition de revêtement de la revendication 1, dans laquelle ladite pluralité de particules est un mélange de particules de différentes tailles.

5. Composition de revêtement de la revendication 4, dans laquelle le mélange comprend de 10 à 50 pourcent en poids de particules ayant une taille de particule dans la plage de 5 jusqu'à 400 nanomètres et de 50 à 90 pourcent en poids de particules ayant une taille de particule dans la plage de 400 à 1000 nanomètres.

6. Composition de revêtement de la revendication 1, dans laquelle lesdites particules sont sphériques.

7. Composition de revêtement de la revendication 1, dans laquelle les particules sont de morphologie non uniforme.

8. Composition de revêtement de la revendication 1, dans laquelle les particules sont comme des disques.

9. Composition de revêtement de la revendication 1, dans laquelle le polymère est choisi dans le groupe consistant en polymères d'acrylique, polymères de polyester, des polymères de polyuréthane et des polymères de polyéther.

10. Composition de revêtement de la revendication 9, dans laquelle le polymère comprend des groupes fonctionnels réactifs choisis dans le groupe consistant en groupes époxy, groupes acide carboxylique, groupes hydroxyle, groupes isocyanate, groupes amide, groupes carbamate, groupes carboxylate et des mélanges de ceux-ci.

11. Substrat métallique directement revêtu d'une couche de finition d'une composition de revêtement comprenant :
a) une résine formant un film, comprenant au moins un polymère contenant un groupe fonctionnel réactif et au moins un agent de durcissement ayant des groupes fonctionnels réagissant avec le groupe fonctionnel du polymère, et
b) une pluralité de particules ayant une plage de tailles de particule de 5 à 1000 nanomètres, dispersées dans ladite résine, sélectionnées parmi du silicate d'aluminium et du verre borosilicaté, et
le rapport de poids de (b) à (a) étant de l'ordre de 0,2 à 2,0 ;
la composition de revêtement contenant un rapport de poids de pigment noir de carbone à résine formant un film d'au moins 0,04, et un rapport de poids de particules à la résine formant un film d'au moins 0,2 ; le revêtement durci déposé à partir de la composition de revêtement ayant un brillant à 20 degrés d'au moins 75 unités et une résistance à la corrosion supérieure d'au moins 10 pourcent après 250 heures d'exposition au brouillard salin par comparaison avec un revêtement similaire sans particule.

12. Substrat de la revendication 11, dans lequel la résistance à la corrosion est supérieure d'au moins 50 pourcent.

13. Substrat de la revendication 11, dans lequel ledit substrat métallique est choisi dans le groupe consistant en aluminium, en acier galvanisé et en acier non traité.

14. Substrat de la revendication 13, dans lequel ledit substrat métallique est de l'acier non traité.

15. Substrat de la revendication 11, dans lequel le revêtement durci a une épaisseur d'au moins 12,7 µm (0,5 mils).

16. Substrat de la revendication 15, dans lequel le revêtement durci a une épaisseur comprise entre 12,7 µm et 127 µm (0,5 et 5,0 mils).

17. Procédé pour améliorer la résistance à la corrosion d'un substrat métallique consistant à appliquer directement sur au moins une partie du substrat métallique comme couche de finition une composition de revêtement comprenant :
a) une résine formant un film, comprenant au moins un polymère contenant un groupe fonctionnel réactif et au moins un agent de durcissement ayant des groupes fonctionnels réagissant avec le groupe fonctionnel du polymère, et
b) une pluralité de particules ayant une plage de tailles de particule de 5 à 1000 nanomètres, dispersées dans ladite résine, sélectionnées parmi du silicate d'aluminium et du verre borosilicaté, et
le rapport de poids de (b) à (a) étant de l'ordre de 0,2 à 2,0.

18. Substrat revêtu de la revendication 11, dans lequel le revêtement durci résultant présente un changement de brillant à 20° et de netteté d'image (DOI) ne dépassant pas 15 pourcent par comparaison avec un revêtement similaire sans particule.

19. Substrat revêtu de la revendication 11, dans lequel le revêtement durci résultant, quand il est déposé directement sur un substrat d'acier non traité, a une résistance à la corrosion supérieure d'au moins 10 pourcent par comparaison avec un revêtement similaire sans particule.

20. Substrat revêtu de la revendication 19, dans lequel la résistance à la corrosion est supérieure d'au moins 50 pourcent.
